# EUROPEAN PATENT APPLICATION

(11) **EP 1 906 609 A1**
(43) Date of publication of application: **02.04.2008**
(21) Application number: 07116565.8
(22) Date of filing: 17.09.2007
(51) Int. Cl.: H04L 12/66, H04Q 7/30

(54) **Device for switching frames of packets of data with optimization of transcoding resource**

(30) Priority: 27.09.2006 FR 0608466
(71) Applicant: Alcatel Lucent, 75008 Paris (FR)
(72) Inventor: Louargant, Michel, 22300, LANNION (FR); Stephan, Yannick, 22730, TREGASTEL (FR); Egault, Gervais, 22700, LOUANNEC (FR)
(74) Representative: Nicolle, Olivier

(57) **Abstract**

The device (DC) for switching frames of packets of data of different types coming from at least two transport networks (N1, N2) using different transport protocol layers comprising a switching module (14), at least two access modules (10, 12) each connected to one of said networks and to said switching module (14). The switching module (14) is adapted, if conversion of coding is to be effected, to cause each frame to be converted to pass in transit through said transcoding module (16) while said switching module (14) is adapted, if there is no coding conversion to be effected, to route a frame directly without causing it to pass in transit through said transcoding module (16).

## Description

The invention relates to the field of packet transport networks, and more precisely to the switching equipments used to switch packets of data between packet transport networks of different types.

Here "switching equipment" means any network equipment responsible for switching packets of different types, for example voice media gateways (MGW), between networks of different types, in particular ATM or IP type communication networks or access networks of type 2G, UMA, 3G, etc.

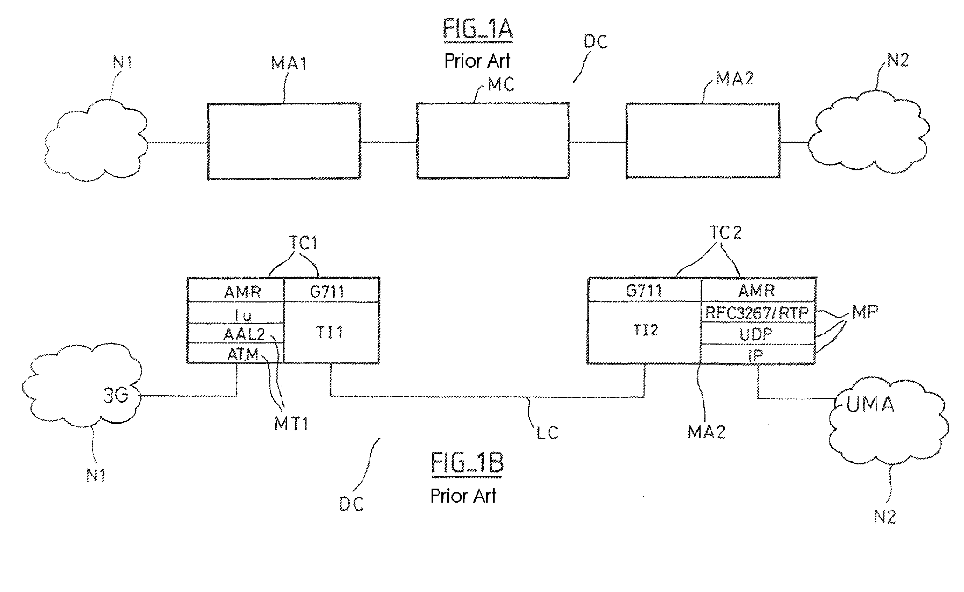

Figures 1A and 1 B show one example of a prior art voice media gateway equipped with a switching device DC and coupled to networks N1 and N2 of different types, namely a 3G network N1, on the one hand, and a UMA network N2, on the other hand. The switching device DC includes an access module MA1, on the (3G) network N1 side, and an access module MA2, on the (UMA) network N2 side, connected to each other by a switching module MC.

It is to be noted that the device described with reference to figures 1A and 1 B does not conform to the transcoder free operation (TrFO) protocol defined by the 3GPP standardization organization, which imposes the transparent passage of the lu transport layer between the two access modules.

In practice (figure 1B), the access module MA1 includes a framing module MT1 receiving from the network N1 frames including ATM protocol cells AAL2 addressed to the network N2, for example, and vice-versa. The access module MA1 further includes a lu transport layer, for example, and a transcoding module TC1 formed by the AMR and G.711 pair.

A link LC connects the access module MA1 to the access module MA2 for transporting voice coded in accordance with an internal transport protocol via the transport layer TI1 for the access module MA1 and the transport layer TI2 for the access module MA2.

For its part, the access module MA2 includes a transcoding module TC2 associating the coding/decoding (codec) pair G.711 and AMR, an RFC3267 layer associated with the transcoding module TC2, and a transport module MP of type RTP, UDP and IP.

This kind of prior art switching device DC systematically includes two complete transcoding modules TC1 and TC2, one for each end, here the AMR/G.711 combination.

Such transcoding modules have the drawback of degrading voice in that each compression/decompression stage causes a loss of information. Moreover, such transcoding modules consume processing resource, which generates a cost for each end.

The Applicant has observed that such transcoding modules are not always indispensable and necessary at each end, in particular in certain calling contexts such as 3G to UMA or IMS to 3G, as well as during other phases such as the lu initialization phase. In effect, in this kind of call, it is not necessary to proceed to a transcoding operation, only the frame adaptation operation having to be effected.

Thus an object of the invention is to improve upon this situation.

It relates to a device dedicated to switching frames of packets of data of different types coming from at least two transport networks using different transport protocol layers, comprising a switching module, at least two access modules each connected to one of the networks and to the switching module, and at least one transcoding module connected to the switching module and adapted, on reception of a frame, coming from an access module, via said switching module, and intended for another access module, to convert payload data in a first code to a second code, and then to transmit said frame to said switching module in order for it to transmit it to said other access module.

According to a general definition of the invention the switching module is adapted, if there is code conversion to be effected, to cause each frame to be converted to pass in transit through said transcoding module while said switching module is adapted, if there is no coding conversion to be effected, to route a frame directly without causing it to pass in transit through said transcoding module.

The transcoding module according to the invention therefore makes its contribution only when transcoding is required. This results in limited degradation of voice compared to the systematic double transcoding of the prior art switching device, together with optimized use of the transcoding resources compared to the

### prior art.

The device according to the invention can have other features and in particular, separately or in combination:
- said switching module includes detection means adapted, when the call is set up, to detect the absence/presence of the need to effect code conversion to be effected;
- the transcoding module is connected to each access module via an interconnection using a chosen communication protocol, the interconnection is of 64 kbps TDM type, and the communication protocol on the interconnection is of internal TFO (Tandem Free Operation) type, for example.

The invention also consists in a network equipment for at least two transport networks using different transport protocol layers, comprising a switching device of the above type.

This equipment takes the form of a voice media gateway (MGW), for example.

The invention is particularly suitable, although not exclusively so, for situations in which a switching equipment is connected to at least two transport networks of 3G and UMA types.

Other features and advantages of the invention will become apparent on reading the following detailed description and examining the appended drawings, in which:
- figures 1A and 1B, already described, illustrate very diagrammatically and functionally one example of a voice media gateway equipped with a prior art switching device and coupled to 3G and UMA networks,
- figure 2A illustrates very diagrammatically and functionally one example of a voice media gateway equipped with a switching device according to the invention and coupled to 3G and UMA networks,
- figure 2B is a detailed view of the switching device from figure 2A when transcoding does not need to be effected,
- figure 2C is a detailed view of the switching device from figure 2A when transcoding needs to be effected, and
- figures 3A and 3B illustrate very diagrammatically and functionally one example of a voice media gateway equipped with a switching device according to the invention and coupled to ATM and IP networks.

The appended drawings can constitute part of the description of the invention as well as contributing to the definition of the invention, if necessary.

An object of the invention is to transport frames of packets of data in a frame switching equipment connected to at least two transport networks of different types.

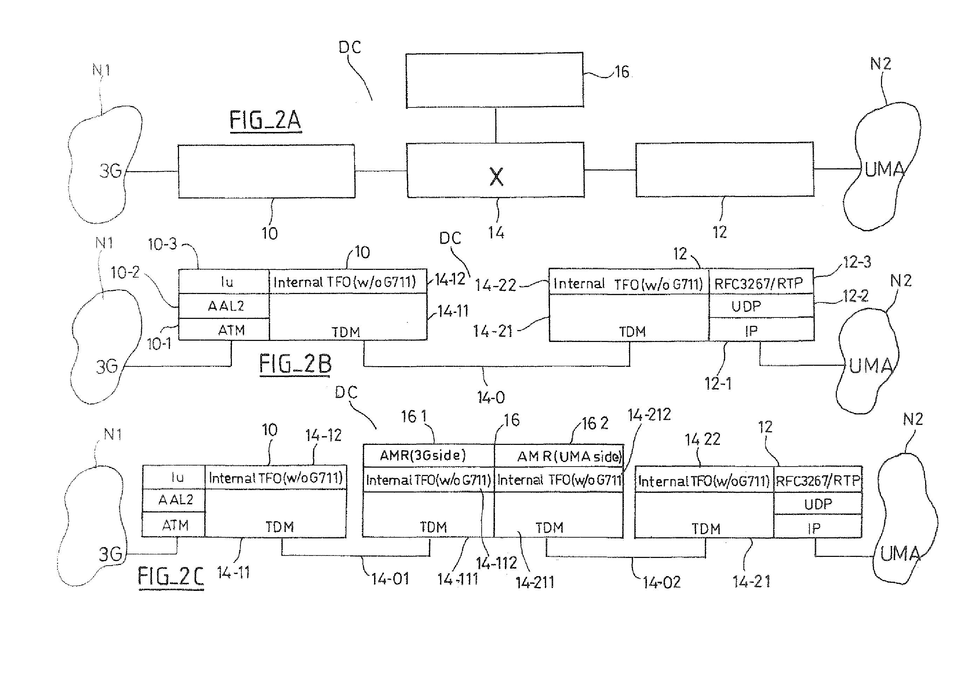

In the examples illustrated in figures 2A to 2C, the switching equipment P (here of MGW type) is connected, by way of illustrative example, on the one hand, to a 3G network (N1) and, on the other hand, to a UMA network (N2). This is a functional description of the various modules, making no assumptions as to their physical implementation. Similarly, the terms "input" and "output" are interchangeable here to the extent that the exchanges of data between the various modules are bidirectional.

Referring to figure 2A, the switching device DC includes a first access module 10, connected to the network N1, a second access module 12, connected to the network N2, a switching module 14 connected to the first and second access modules 10, 12, and a transcoding module 16 connected to the switching module 14.

Referring to figure 2B, the access module 10 includes an interface on the network N1 side and an internal interface.

The interface on the network N1 side is formed of an ATM layer (10-1), an AAL2 layer (10-2) and a lu layer (10-3). The access module receives from the ATM network N1 frames including AAL2 over ATM cells.

The internal interface includes a TDM interconnection layer (14-11) supporting an internal tandem free operation (TFO) layer (14-2). The compressed voice samples from the access module 10 are transported over TDM (64 kbps channel) in accordance with the internal tandem free operation without G.711 (TFO) protocol, i.e. a frame structure for transporting variable bit rate compressed data over a 64 kbps interconnection link.

Similarly, the access module 12 includes an interface on the network N2 side and an internal interface.

The interface on the network N2 side includes an RFC3267/RTP transport layer (12-3), a UDP transport layer (12-2) and an IP transport layer (12-1). The interface on the network N2 side receives the frames coming from UMA (N2) and addressed to the ATM network N1 and vice-versa.

The internal interface of the access module 12 is identical to the internal interface of the access module 10 and includes the TDM interconnection layer (14-21) supporting the internal TFO layer (14-22).

If there is no code conversion to be effected (figure 2B), the internal interfaces of the access modules are connected directly to each other via a link 14-0 to route a frame directly from one network to the other without it passing in transit through any transcoding module.

Here the TDM interconnection (14-0) is a direct path between the access modules 10 and 12.

Note that each network side interface of the access modules 10 and 12 includes a respective transport layer linked to transcoding. This refers to the lu transport layer (10-3) for the access module 10 and the RFC3267 transport layer (12-3) for the access module 12.

When there is code conversion to be effected (figure 2C), for example in the case where certain elements of the coding/decoding of the networks are not compatible, the transcoding module 16 is inserted between the access modules 10 and 12 to convert the voice samples.

In practice, the transcoding module 16 is responsible for converting the data that is contained in the frames and that is coded in a first code (for example by CODEC A of type AMR for 3G(16-1)), respectively a second code (by CODEC B of type AMR for UMA (16-2)), into data coded in the second code (by CODEC B), respectively the first code (by CODEC A).

The transcoding module 16 is preferably a single module shared by the access modules 10 and 12. Alternatively, it can be divided into a number of portions each associated with one access module.

The transcoding module 16 further includes an input interface associated with the transcoding layer 16-1 and an output interface associated with the transcoding layer 16-2.

The input interface of the transcoding module 16 includes the TDM layer (14-111) and the internal TFO layer (14-112).

The output interface of the transcoding module 16 includes the TDM layer (14-211) and the internal TFO layer (14-212).

When there is code conversion to be effected (figure 2C), there is provided, on the one hand, a TDM interconnection (14-01) between the TDM layer (14-11) of the output interface of the access module 10 and the TDM layer (14-111) of the input interface of the transcoding module 16 and, on the other hand, a TDM interconnection (14-02) between the TDM layer (14-21) of the output interface of the access module 12 and the TDM layer (14-211) of the output interface of the transcoding module 16.

Here the TDM interconnections (14-01 and 14-02) are paths between the access modules 10 and 12 and the transcoding module 16.

In practice, the switching module includes detection means able, upon setting up the call, to detect the absence/presence of the need to effect code conversion.

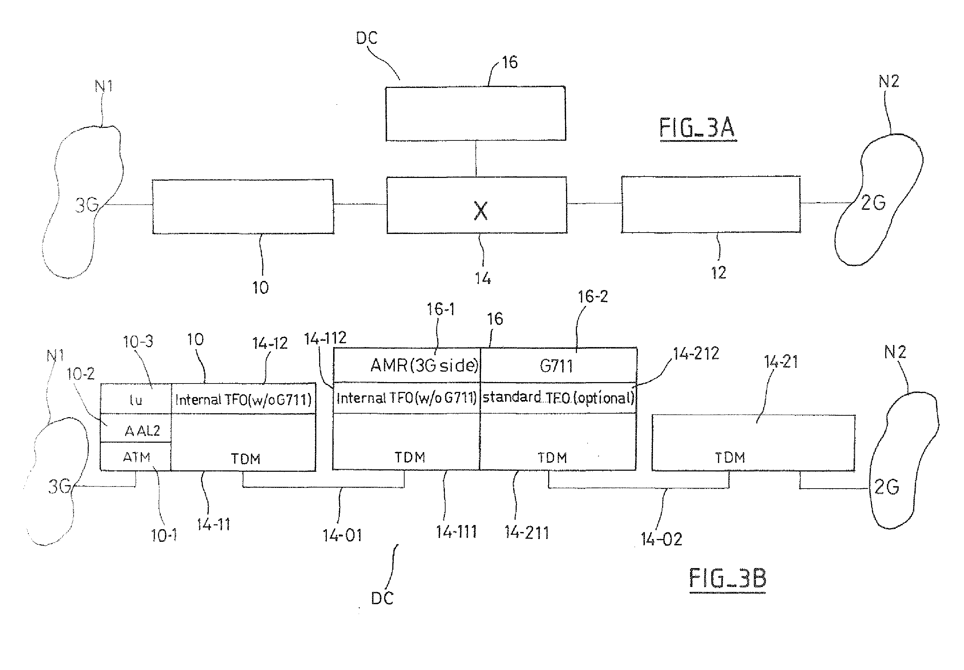

Figures 3A and 3B show a switching equipment P in a 3G (N1) and 2G (N2) context in which the transcoding function is always required.

These figures show the essential components of the switching module P described with reference to figures 2A to 2C, namely two access modules 10 and 12, a switching module 14 and a transcoding module 16.

Figure 3B includes the access module 10 described with reference to figure 2C and the interface of the 2G side transcoding module 16.

The output interface of the transcoding module includes a G.711 type transcoding layer (16-2), a standard TFO layer (14-212) and a TDM layer (14-211).

The access module 12 includes only a TDM layer (14-21).

This figure shows the TDM interconnection (14-01) between the TDM layer (14-11) of the internal interface of the access module 10 and the TDM layer (14-111) of the input interface of the transcoding module 16 and the TDM interconnection (14-02) between the TDM layer (14-21) of the internal interface of the access module 12 and the TDM layer (14-211) of the output interface of the transcoding module 16.

Here the TDM interconnections (14-01 and 14-02) are paths between the access modules 10 and 12 and the transcoding module 16.

The transcoding function extracts the compressed voice samples coming from the TFO frames and directs them to the decoder before sending the G.711 samples to the 2G network and vice-versa.

Thanks to the invention, the capacity of the transcoding function is enhanced by choosing the best technology for each process. For example, the processor technology can be used for the access modules while the programmable component (FPGA) technology can be chosen for the transcoding module. Obviously, other technologies can be used.

Generally speaking, the switching device of the invention, and in particular the access modules 10 and 12 and the transcoding module 16, can be produced in the form of electronic components, software (or electronic data processing) modules, or a combination of components and software.

Moreover, the invention enables the use of transcoding modules 16 independent of the transport interfaces and therefore of the transport protocols used by the transport networks.

Thanks to the invention, the overall performance of a voice gateway is enhanced in terms of voice quality, internal latency, the number of users supported. Moreover, the cost per user is lower.

The invention is not limited to the switching device and network equipment embodiments described hereinabove are by way of example only and encompass all variants that the person skilled in the art might envisage within the scope of the following claims.

## Claims

1. Device (DC) for switching frames of packets of data of different types coming from at least two transport networks (N1, N2) using different transport protocol layers, comprising a switching module (14), at least two access modules (10, 12) each connected to one of said networks and to said switching module, and at least one transcoding module (16) connected to said switching module (14) and adapted, on reception of a frame, coming from an access module (10), via said switching module (14), and intended for another access module (12), to convert payload data in a first code to a second code, and then to transmit said frame to said switching module (14) in order for it to transmit it to said other access module (12), **characterized in that** said switching module (14) is adapted, if there is code conversion to be effected, to cause each frame to be converted to pass in transit through said transcoding module (16) while said switching module (14) is adapted, if there is no coding conversion to be effected, to route a frame directly without causing it to pass in transit through said transcoding module (16).

2. Device according to claim 1, wherein said switching module includes detection means adapted, when setting up the call, to detect the absence/presence of coding conversion to be effected.

3. Device according to claim 1 or claim 2, wherein the transcoding module (16) is connected to each access module (10, 12) via an interconnection (14-0, 14-01, 14-02) using a chosen communication protocol.

4. Device according to claim 3, wherein the interconnection is of 64 kbps TDM type.

5. Device according to claim 3 or claim 4, wherein the communication protocol on the interconnection is of internal TFO type.

6. Network equipment (P) for at least two transport networks (N1, N2) using different transport protocol layers, **characterized in that** it comprises a switching device (DC) according to any one of the preceding claims.

7. Equipment according to claim 6, **characterized in that** it belongs to a voice media gateway.
